# EUROPEAN PATENT SPECIFICATION

(11) **EP 1 507 976 B1**
(45) Date of publication and mention of the grant of the patent: **25.10.2006**
(21) Application number: 03730475.5
(22) Date of filing: 27.05.2003
(51) Int. Cl.: F04B 13/02, A23G 9/20, F04B 15/00, F04B 53/16, F04B 23/06, F04B 53/00

(54) **A PUMP UNIT FOR EMULSIFYING AIR INTO A PRODUCT IN PARTICULAR FOR ICE CREAM PRODUCTION**
EINE PUMPENEINHEIT ZUR EMULGIERUNG EINES PRODUKTS MIT LUFT, INSBESONDERE FÜR EISCREMEPRODUKTION
UNITE POMPE PERMETTANT D'EMULSIFIER L'AIR DANS UN PRODUIT, NOTAMMENT UN PRODUIT CREME GLACEE

(30) Priority: 28.05.2002 IT MI20021153
(43) Date of publication of application: 23.02.2005
(73) Proprietor: TEKNO-ICE S.r.l., 20090 Buccinasco (Milano) (IT)
(72) Inventor: CONTE, Santino, 20021 Bollate (Milano) (IT)
(74) Representative: Vittorangeli, Lucia
(86) International application number: PCT/IT2003/000323
(87) International publication number: WO 2003/100252

(56) References cited:
- EP-A- 0 502 360
- GB-A- 350 660
- GB-A- 936 848
- US-A- 4 453 898
- US-A- 4 773 833

## Description

**.** The object of the present invention is a pump unit for emulsifying air into a product, in particular for the production of ice cream, according to the preamble of claim 1.

**.** As is known, the pump units of the above indicated type have a cavity in which the corresponding pistons run. Such a cavity performs simultaneously, the function of guiding the pistons and the function of a working chamber for the product, in which the mixing between air and the product takes place.

**.** Such dual functions require the maintenance of extremely narrow tolerances in the coupled running between the pistons and the cavity and results in disadvantages with the running of the pistons above all immediately following cleaning steps of the pump unit which eliminates the lubrication between the pistons and the walls of the cavity. US-A-3958903, US-A-5746111, US-A-4991495 are examples of guides in the field of pumps.

**.** The problem at the heart of the present invention is that of proposing a pump unit which has structural characteristics and functionality such as to overcome the above cited drawbacks with reference to the

### prior art.

. Such a problem is solved by a pump unit of the type indicated above, in agreement with claim 1.

. Further characteristics and advantages of the pump unit according to the invention will appear from the descriptions of preferred embodiments reported below, which are merely given as indicative and non limitative, with reference to the attached figures, wherein:

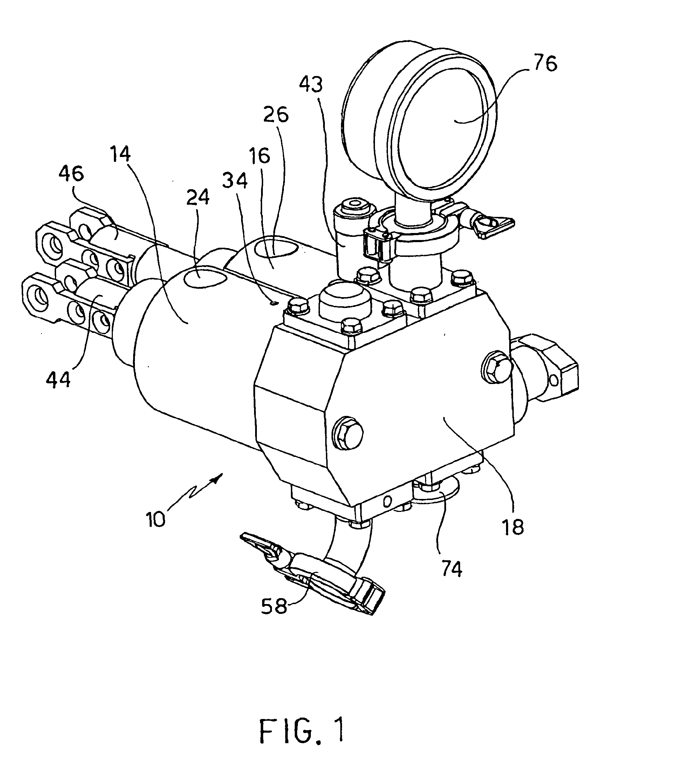

**.** Figure 1 illustrates a perspective view of a pump unit according to the present invention;

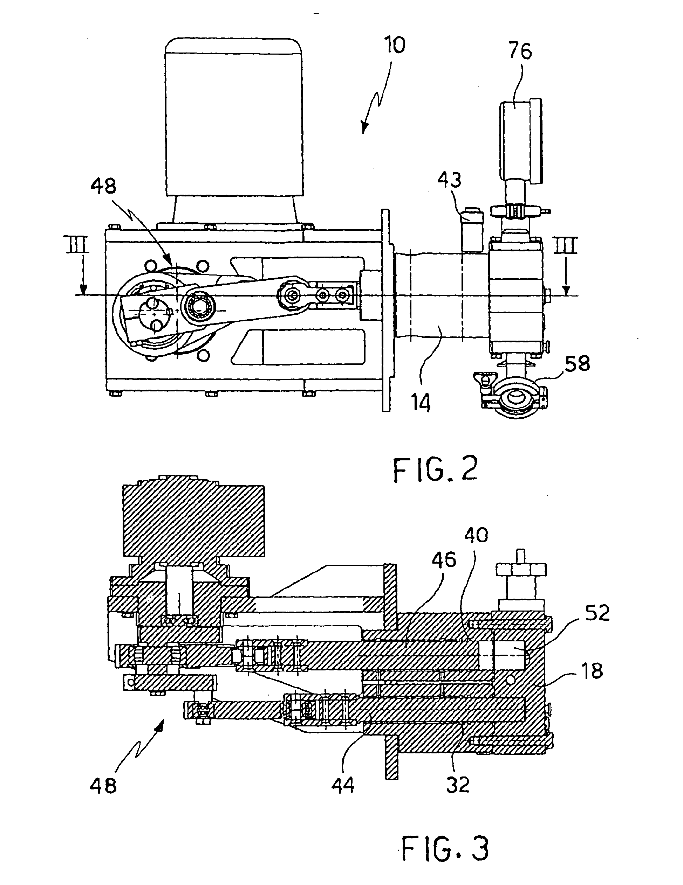

**.** Figure 2 shows a lateral view of a pump unit according to the present invention;

**.** Figure 3 shows a sectional view according to the trace III-III of figure 2;

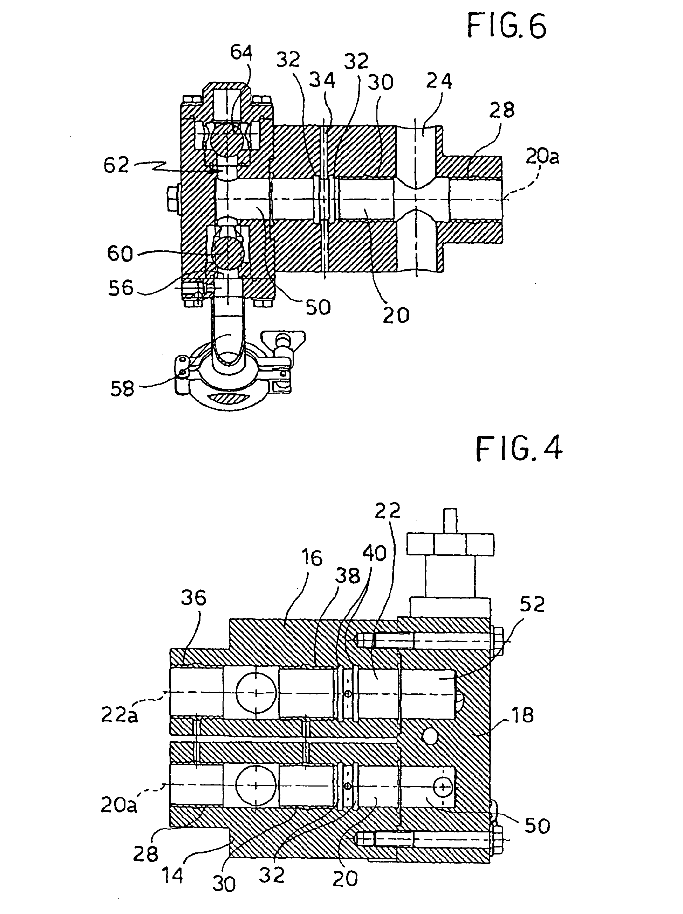

. Figure 4 shows a detail of the sectional view of figure 3, wherein some elements have been omitted in order to show others;

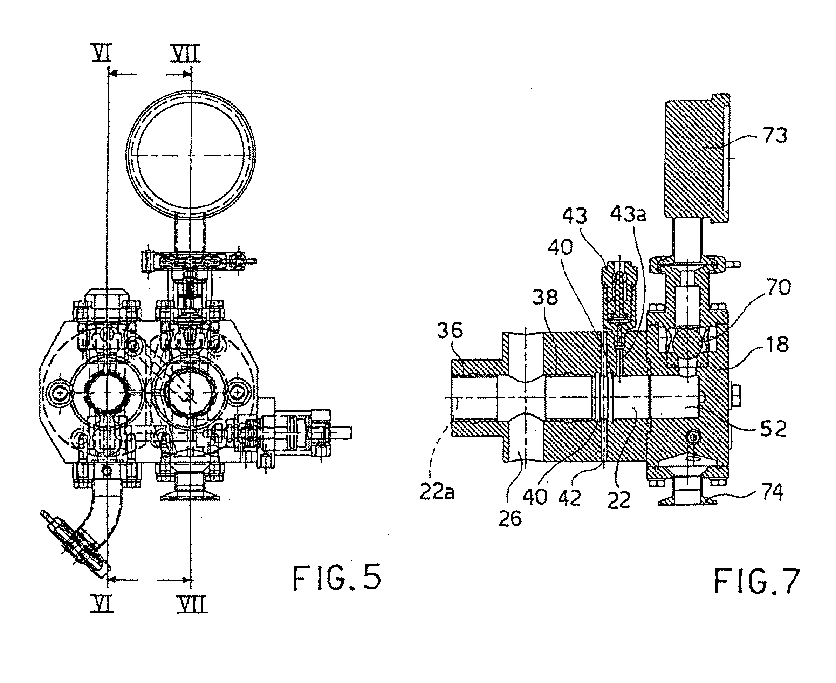

**.** Figure 5 shows a front view of the pump unit according to the present invention;

**.** Figure 6 shows a sectional view taken along the line VI-VI of the pump unit of figure 5;

**.** Figure 7 shows a sectional view taken along the line VII-VII of the pump unit of figure 5;

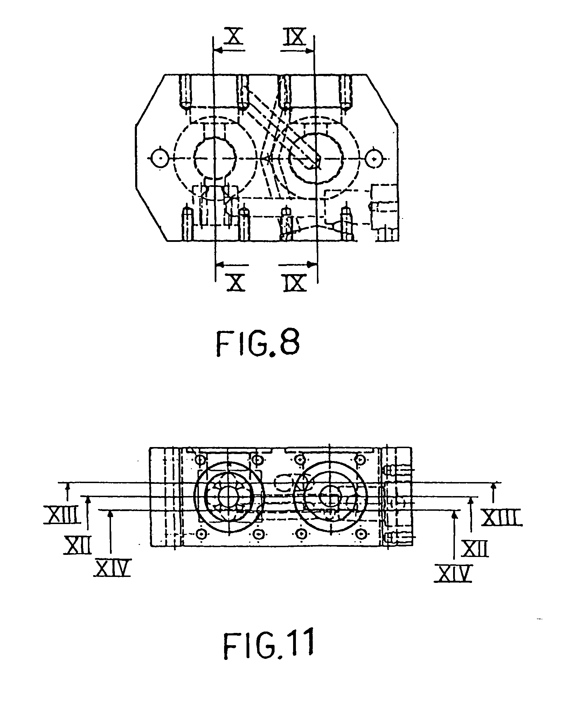

. Figure 8 shows a front view of a detail of the pump unit of figure 1, in partial transparency;

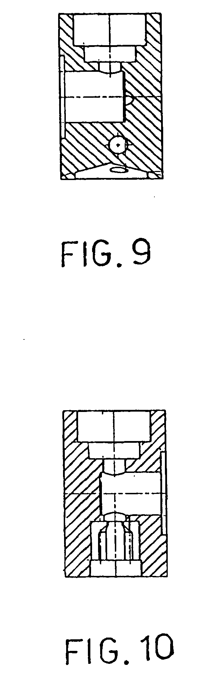

**.** Figure 9 shows a sectional view taken along the line IX-IX of the detail of figure 8;

. Figure 10 shows a sectional view taken along the line X-X of the detail of figure 8;

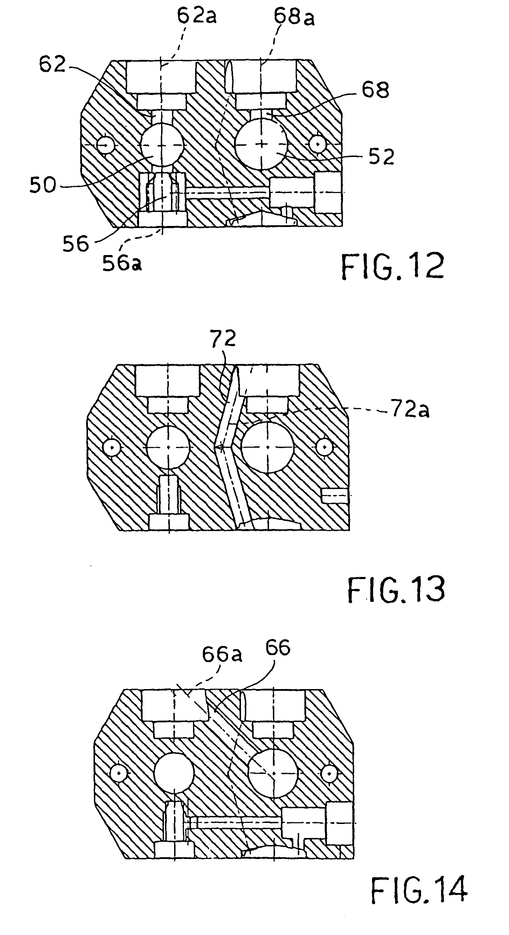

**.** Figure 11 shows a top view of a detail of figure 8;

. Figure 12 shows a sectional view taken along the line XII-XII of the detail of figure 11;

. Figure 13 shows a sectional view taken along the line XIII-XIII of the detail of figure 11;

**.** Figure 14 shows a sectional view taken along the line XIV-XIV of the detail of figure 11.

. With reference to the above mentioned figures, with 10 has been generally indicated the pump unit of a machine for ice cream production. Such a pump unit is mounted partially outside an encasing structure of the machine itself.

**.** The pump unit 10 comprises a first body 14 and a second body 16 placed side by side to each other. One end of the two bodies 14 and 16 is mounted onto an encasing structure of the machine whilst the opposite end is closed by a cylinder head 18 screwed to each of the two bodies.

**.** The first body 14 has a corresponding first cylindrical cavity 20 open on both ends of the body itself. The second body 16 also has a corresponding second cylindrical cavity 22 open on both ends of the body itself. Each cavity has a longitudinal axis 20a and 22a located parallel to the axis of the other cavity.

. The diameter of the first cylindrical cavity 20 bored in the first body 14 is less than the diameter of the second cylindrical cavity 22 bored in the second body 16.

. The first body 14 has a conduit 24 which crosses the first cavity 20 transversally in a position intermediate to it, preferably slightly closer to the opposite end from the cylinder head 18. Analogously the second body 16 has a conduit 26 which crosses the second cavity 22 transversally in a position intermediate to it, preferably slightly closer to the opposite end from the cylinder head 18.

. The first cavity 20 comprises a guide portion which houses a first guide 28 and a second guide 30 made from a plastic material. The first guide 28 extends axially from the free end of the first cavity 20 up to a point close to the intersection between the first cavity and the first conduit 24. The second guide 30 extends axially within the first cavity 20 from the intersection with the first conduit 24 up to the intermediate point of the first cavity 20.

. The first and second guides 28 and 30, located in a first portion of the first cavity, preferably have a slightly lower diameter than a second portion of the cavity itself, corresponding to the portion which extends from the second guide 30 to the cylinder head 18.

. Between the first portion and the second portion of the first cavity 20 two holding rings 32 which are spaced slightly apart from one another, in the axial direction are provided. The first body 14 has in addition a channel 34 which transversally intersects the first cavity 20 in correspondence with the area between the two holding rings 32. Such a channel 34 develops along the entire thickness of the first body 14.

**.** The second body 16 has analogous characteristics to these of the first body 14. In particular the second cavity 22 comprises a portion of the guide which houses a first guide 36 and a second guide 38 which are made from a plastic material. The first guide 36 extends axially from the free end of the second cavity 22 up to a point close to the intersection between the second cavity and the second conduit 26. The second guide 38 extends axially within the second cavity 22 from the intersection with the second conduit 26 up to an intermediate point of the second cavity 22.

**.** The first and second guides 36 and 38, housed within a portion of the second cavity, hereinafter indicated as the first portion, also preferably have a diameter slightly lower than a second portion of the cavity itself, corresponding to the portion which extends from the second guide 38 to the cylinder head 18.

. Between the first and second portion of the second cavity 22 are envisaged two holding rings 40 spaced slightly apart, in the axial direction, from one another. The second body 16 has in addition a channel 42 which transversally intersects the second cavity 16 in correspondence with the area between the two holding rings 40. Such a channel 42 develops along the entire thickness of the second body 16.

. In addition to what described above, which substantially finds agreement in the characteristics of the first body 14, the second body 16 has a non return air valve 43 communicated with the second cavity 22 through a conduit 43a which opens out between the holding rings 40 and the cylinder head 18.

. A piston is slidingly inserted inside each cavity, indicated by 44 and 46 respectively with reference to the first cavity 20 and the second cavity 22. The first piston 44 has a diameter inferior to that of the second piston 46.

**.** The ends of the two pistons which protrude out from the respective cavities are operatively connected to moving means 48 of a substantially known type and adapted to operate the two pistons out of phase, that is in such a way that when the first piston is at its inner dead point, the second piston will be substantially at its outer dead point, and *vice versa.*

. Each piston translates within the respective cavity in correspondence with the first portion, that is in correspondence with the plastic material guide. The coupling between the pistons and the respective guides is made with minimum tolerance.

. The cylinder head 18 comprises two cavities 50 and 52 which face the respective cavities 20 and 22 of the first and second bodies so as to extend them inside the cylinder head 18 according to a direction parallel to the axes 20a and 22a. Each of the two cavities 50 and 52 ends with a respective bottom 50a and 52a. The diameter of each cavity 50 and 52 of the cylinder head 18 is equal to that of the corresponding cavity 20 and 22 onto which it faces.

**.** The head of each piston defines with the walls of the related cavity a chamber of variable axial dimensions as a function of the position of the piston itself. Such a chamber, at its maximum extension, extends between the cylinder head and the related body, in correspondence with the related cavity of the cylinder head 18 and the second portion devoid of the plastic material guides.

**.** The holding rings 32 and 40 delimit therefore the sliding portion of the piston of the actual product working chamber.

. The cavity 50 which faces onto the first cavity 20 of the first body 14 is connected, internally to the cylinder head 18, to a product feeding conduit 56 which extends to the product entry junction 58 and houses a valve 60. The feeding conduit 56 has longitudinal axes 56a located transversally with respect to the longitudinal axes 20a of the first cavity 20 and the cavity 50 and vertically with respect to an absolute reference system.

**.** Within the cylinder head 18, the cavity 50 has in addition an exit conduit 62 with longitudinal axes 62a located transversally with respect to the longitudinal axes 20a of the first cavity 20 and the cavity 50 and vertically with respect to an absolute reference system, as an ideal extension of the longitudinal axes 56a of the feeding conduit.

. The exit conduit 62 houses a valve 64 positioned coaxially with the exit conduit 62 and therefore according to a vertical direction.

. The cavity 50 is in addition connected to the cavity 52 through a connection conduit 66 inside the cylinder head 18 which has a longitudinal axis 66a inclined with respect to the longitudinal axis 56a or 62a, preferably at an angle equal to 45°. In addition, the longitudinal axis 66a is positioned on a different plane to that which contains the longitudinal axes 56a or 62a and is preferably perpendicular to the longitudinal axis 20a of the first cavity 20. According to the example illustrated in the figures, the longitudinal axis 66a of the connecting conduit 66 is located in an external plane with respect to the feed conduit 56 or to the exit conduit 62, by external is meant a plane further beyond the first and second bodies with respect to the feed conduit 56 or the exit conduit 62.

. According to the example illustrated in figure 14, the connecting conduit 66 extends between the exit conduit 62 and the cavity 52, having greater diameter.

. The cavity 52 having greater diameter has internally to the cylinder head 18 an exit conduit 68 with longitudinal axis 68a placed transversally with respect to the longitudinal axis 22a of the second cavity 22 and the cavity 52 and vertically with respect to an absolute reference system. More particularly, the longitudinal axis 68a lies on the same plane, perpendicular to the axes 20a and 22a containing the axes 56a and 62a of the feed and exit conduits of the cavity 52.

. The exit conduit 68 houses a valve 70 positioned coaxially with the exit conduit 68 and therefore according to a vertical direction

. Finally, the exit conduit 68 extends into a connection conduit 72 within the cylinder head 18 which in turn terminates in a junction 74 outside the cylinder head 18.

. The connection conduit 72 has a longitudinal axis 72a which is inclined with respect to the longitudinal axis 68a and constituted by a broken line which lies in a plane parallel to the plane containing the longitudinal axis 66a of the connection conduit 66 and more internally with respect to the plane containing the longitudinal axes 56a, 62a and 68a.

**.** In completion of the structural description of the present finding, with 76 has been indicated a pressure gauge fixed to the pump unit in correspondence with the cavity 52 and the valve 70.

**.** In the following is reported the description of the working of a pump unit according to the present invention.

. In the withdrawal phase of the piston 44, the product constituted by a mixture for ice cream enters into the pump unit 10 through the junction 58, passing through the valve 60 and occupying the chamber made available between the cavity 50 and the first cavity 20.

. In the advancement phase of the piston 44 and the withdrawal phase of the piston 46, the product mixture passes through the exit conduit 62 and the valve 64 advantageously placed vertically. Through the connection conduit 66 the mixture reaches the chamber provided between the cavity 52 and the second cavity 22. At the same time air is drawn in through the non return valve 43 which is then emulsified into the mixture. The prevision of a greater diameter with respect to the first cavity allows the expansion of the mixture emulsified with air.

. Subsequently, during the advancement phase of the piston 46, the product mixture passes through the valve 70, itself also advantageously positioned with a vertical axis, and the connecting conduit 72 until reaching the junction 74 to exit from the pump unit 10.

**.** After some working stages, the unit is cleaned by introducing washing water both through the conduits 24 and 26, which allow the cleaning of the guide portions of the pistons, and through the channels 34 and 42 which allow the cleaning of the portions between the two holding rings 34 and the two holding rings 40.

**.** From the above description it can be appreciated how the provision of a pump unit according to the present invention allows the satisfaction of the requirement to subdivide the functions of running and guiding the piston within the respective cavity from that of the working of the product and in particular of the ice cream mixture.

. In addition, thanks to the provision of two distinct guides positioned coaxially at a fixed distance, it is possible to create an optimal guide for the respective piston, maintaining the possibility for the correct cleaning of the unit.

**.** An additional advantage of the pump unit according to the present invention lies in the possibility to guarantee the separation of the guiding portion from that of the working, thanks to the presence of holding rings, the cleaning of which is in turn guaranteed by the presence of the channels 34 and 40.

. An additional advantage of the pump unit according to the present invention lies in the advantageous positioning of the valves exiting from the cavity 50 and exiting from the cavity 52. The original vertical positioning of such valves allows the limiting of the wear of its seat due to the interaction with the mobile sphere constituting the shutter of the valve itself.

. A further advantage of the pump unit according to the invention lies in the uncommon structural simplicity of it, which allows its production at a very restricted cost.

**.** It is clear that variations and/or additions to that described and illustrated above can be envisaged.

**.** To the preferred embodiment solution of the above described pumping unit, those of ordinary skill in the art, with the aim of satisfying contingent and specific needs, can make numerous modifications and adaptations without however departing from the scope of the invention, which is defined in the following claims.

## Claims

1. A pump unit (10) for emulsifying air into a product, in particular for the production of ice cream, comprising:
a first body (14) and a second body (16) placed side by side to each other and provided with respective first and second cylindrical cavities (20, 22), each having longitudinal axes (20a, 22a) placed parallel to the axis of the other cavity,
a cylinder head (18) mounted at one end of said first and second bodies (14, 16) and provided with cavities (50, 52) respectively located as extensions of the cavities (20, 22) of said first and second bodies (14, 16),
**characterised by** the fact that said first cavity (20) and said second cavity (22) respectively comprise a guide portion which houses at least a guide (28, 30, 36, 38) made from plastic material and which extend up to an intermediate point of said first and second cavities (20, 22) and by the fact that a product working chamber is envisaged which can extend from said intermediate point up to a respective bottom (50a, 52a) of the cavities (50, 52) bored in the cylinder head (18), said guide portion having a lesser diameter than said working chamber, in which said guide portion comprises a first guide (28, 36) and a second guide (30, 38) inserted axially at a set distance from one another, and
in which the first body (14) has a conduit (24) which transversally crosses the first cavity (20) in an intermediate position to the first and second guides (28, 30) and wherein the second body (16) has a conduit (26) which transversally crosses the second cavity (22) in an intermediate position to the first and second guides (36, 38).

2. The pump unit (10) according to claim 1, wherein at least one holding ring (32, 40) is provided in each of said first and second cavities (20, 22) located in an intermediate position between the guide portion and the working chamber.

3. The pump unit (10) according to claim 2, wherein two holding rings (32, 40) are provided in each of said first and second cavities and a channel (34, 42) which transversally intersects the fist cavity (20) and the second cavity (22) respectively in correspondence with the area between the two holding rings (32, 40).

4. The pump unit (10) according to claim 3, in which each channel (34, 42) develops along the entire thickness of the first body (14) and the second body (16) respectively.

5. The pump unit (10) according to any of the preceding claims, wherein the second body (16) has a non return air valve (43) placed in communication with the second cavity (22) through a conduit (43a).

6. The pump unit (10) according to the claims 2 and 5 wherein said conduit (43a) opens into the second cavity (22) between the at least one holding ring (40) and the cylinder head (18).

7. The pump unit (10) according to any of the preceding claims, wherein the cavities (50, 52) bored into the cylinder head (18) are connected to each other by conduits (56, 62, 66, 68) internally bored into the cylinder head (18) of which at least two lengths have longitudinal axes (62a, 68a) transversal to the longitudinal axes (20a, 22a) of the first and second cavities (20, 22) of the first and second bodies (14, 16) .

8. The pump unit (10) according to claim 7, wherein the conduits (56, 62, 66, 68) comprise at least two lengths with longitudinal axes (62a, 68a) perpendicular to the longitudinal axes (20a, 22a) of the first and second cavities (20, 22) respectively of the first and second bodies (14, 16) and located according to a vertical direction with respect to an absolute reference system.

9. The pump unit (10) according to claim 8, wherein said lengths (62a, 68a) respectively house valves (64, 70) positioned with axes coinciding with the axes of said lengths.

10. The pump unit (10) according to claim 9, wherein said conduits inside the cylinder head (18) comprise an exit conduit (62) with a longitudinal axis (62a) positioned transversally with respect to the longitudinal axis (20a) of the first cavity (20) and of the cavity (50) and vertically with respect to an absolute reference system.

11. The pump unit (10) according to claim 10, wherein said exit conduit (62) houses said valve (64) positioned coaxially with the exit conduit (62).

12. The pump unit (10) according to claim 10, wherein said conduits comprise a connecting conduit (66) which extends, internally within the cylinder head (18), from the exit conduit (62) to the cavity (52) with a greater diameter and which has a longitudinal axis (66a) inclined with respect to the longitudinal axis (62a) of the exit conduit (62).

13. The pump unit (10) according to claim 12, wherein said connecting conduit (66) inside the cylinder head (18) has a longitudinal axis (66a) inclined with respect to the longitudinal axis (62a) of the exit conduit (62) at an angle equal to 45°.

14. The pump unit (10) according to claims 12 or 13, wherein said longitudinal axis (66a) is positioned within a different plane from that which holds the longitudinal axis (62a) of the exit conduit (62) and perpendicular to the longitudinal axis (20a) of the first cavity (20).

15. The pump unit (10) according to claim 14, wherein said plane in which the longitudinal axis (66a) of the connecting conduit (66) lies is situated within an external portion of the cylinder head (18) with respect to the longitudinal axis (62a) of the exit conduit (62).

16. The pump unit (10) according to claim 9, wherein said conduits comprise an exit conduit (68) from the cavity (52) with greater diameter, having longitudinal axis (68a) placed transversally with respect to the longitudinal axis (22a) of the second cavity (22) and of the cavity (52) and vertically with respect to an absolute reference system.

17. The pump unit (10) according to claim 16, wherein said longitudinal axis (68a) lies on a plane perpendicular to the axes (20a, 22a) of the first and second cavities (20, 22) and containing the longitudinal axis (62a) of the exit conduit of the cavity (50) of lesser diameter.

18. The pump unit (10) according to claims 16 or 17, Wherein the exit conduit (68) houses said valve (70) located coaxially with the exit conduit (68).

19. The pump unit (10) according to claim 16, wherein the exit conduit (68) extends into a connecting conduit (72) inside the cylinder head (18) which ends in a junction (74) outside the cylinder head itself.

20. The pump unit (10) according to claim 19, wherein the connecting conduit (72) has a longitudinal axis (72a) inclined with respect to the longitudinal axis (68a) of the exit conduit (68) and is constituted by a broken line.

21. The pump unit (10) according to claim 20, wherein said longitudinal axis (72a) of the connecting conduit (72) is located in a portion within the cylinder head (18) with respect to the longitudinal axes (62a, 68a) of the exit conduits of the respective cavities (50, 52).

22. The pump unit (10) according to claim 9, wherein said cavity (50) is connected to a feed conduit (56) inside the cylinder head (18) having a longitudinal axis (56a) located transversally with respect to the longitudinal axis (20a) of the first cavity (20) and of the cavity (50) and vertically with respect to an absolute reference system.

## Patentansprüche

1. Pumpeneinheit (10) zum Emulgieren eines Produkts mit Luft, insbesondere für die Eiscremeproduktion, umfassend:
einen ersten Körper (14) und einen zweiten Körper (16), die nebeneinander angeordnet und mit entsprechenden ersten und zweiten zylindrischen Kavitäten (20, 22) versehen sind, jede mit parallel zu der Achse der anderen Kavität angeordneten Längsachsen (20a, 22a),
einen Zylinderkopf (18), der an einem Ende der ersten und zweiten Körper (14, 16) angebracht und mit Kavitäten (50, 52) versehen ist, die sozusagen als Erweiterungen der Kavitäten (20, 22) der ersten und zweiten Körper (14, 16) angeordnet sind,
**dadurch gekennzeichnet, dass** die erste Kavität (20) bzw, die zweite Kavität (22) einen Führungsabschnitt umfasst, welcher zumindest eine Führung (28, 30, 36, 38) beinhaltet, die aus Plastikmaterial gemacht ist und die sich zu einem Zwischenposition der ersten und zweiten Kavitäten (20, 22) erstreckt, und **dadurch**, dass ein Produktarbeitsraum gegenüberliegt, der sich von dem Zwischenposition bis hin zu einem entsprechenden Boden (50a, 52a) der Kavitäten (50, 52) die in den Zylinderkopf (18) gebohrt sind, erstrecken kann, wobei der Führungsabschnitt einen kleineren Durchmesser als der Arbeitsraum hat, wobei der Führungsabschnitt eine erste Führung (28, 36) und eine zweite Führung (30, 38) umfasst, die axial in einem festgelegten Abstand voneinander eingeführt sind, und wobei der erste Körper (14) eine Durchführung (24) hat, der die erste Kavität (20) an einer Zwischenposition zu den ersten und zweiten Führungen (28, 30) transversal durchkreuzt, und wobei der zweite Körper (16) eine Durchführung (26) hat, welche die zweite Kavität (22) an einer Zwischenposition zu den ersten und zweiten Führungen (36, 38) transversal durchkreuzt.

2. Die Pumpeneinheit (10) nach Anspruch 1, wobei zumindest ein Haltering (32, 40) in jeder der ersten und zweiten Kavitäten (20, 22) vorliegt, der in einer Zwischenposition zwischen dem Führungsabschnitt und dem Arbeitsraum angeordnet ist.

3. Pumpeneinheit (10) nach Anspruch 2, wobei zwei Halteringe (32,40) in jeder der ersten und zweiten Kavitäten vorliegen und ein Kanal (34, 42), der transversal die erste Kavität (20) bzw. die zweite Kavität (22) in Übereinstimmung mit dem Bereich zwischen den beiden Halteringen (32, 40) schneidet.

4. Pumpeneinheit (10) nach Anspruch 3, in der jeder Kanal (34, 42) sich entlang der gesamten Dicke des ersten Körpers (14) bzw. und des zweiten Körpers (16) ausbildet.

5. Pumpeneinheit (10) nach einem der vorstehenden Ansprüche, wobei der zweite Körper (16) ein Lufuückschlagsventil (43) hat, das durch eine Durchführung (43a) in Verbindung mit der zweiten Kavität (22), angeordnet ist.

6. Pumpeneinheit (10) nach einem der Ansprüche 2 und 5, wobei die Durchführung (43a) sich in die zweite Kavität (22) zwischen dem zumindest einen Haltering (40) und dem Zylinderkopf (18) öffnet.

7. Pumpeneinheit (10) nach einem der vorstehenden Ansprüche, wobei die Kavitäten (50, 52), die in den Zylinderkopf gebohrt sind (18), durch Durchführungen (56, 62, 66, 68), die intern in den Zylinderkopf (18) gebohrt sind, miteinander in Verbindung stehen, von denen zumindest zwei Längen Längsachsen (62a, 68a) transversal zu den Längsachsen (20a, 22 a) der ersten und zweiten Kavitäten (20, 22) der ersten und zweiten Körper (14, 16) haben.

8. Pumpeneinheit (10) nach Anspruch 7, wobei die Durchführungen (56, 62, 66, 68) zumindest zwei Längen mit Längsachsen (62a, 68a) umfassen, die senkrecht auf den Längsachsen (20a, 22a) der ersten und zweiten Kavitäten (20, 22) bzw, der ersten und zweiten Körper (14, 16) stehen, und entsprechend einer vertikalen Richtung in Bezug auf ein absolutes Referenzsystem angeordnet sind.

9. Pumpeneinheit (10) nach Anspruch 8, wobei die Längen (62a, 68a) jeweils Ventile (64, 70) mit Achsen aufnehmen, die mit den Achsen der besagten Längen zusammenfallen.

10. Pumpeneinheit (10) nach Anspruch 9, wobei die Durchführungen innerhalb des Zylinderkopfs (18) eine Auslassdurchführung (62) mit einer Längsachse (62a) umfassen, die unter Bezug auf die Längsachse (20 a) der ersten Kavität (20) und der Kavität (50) transversal angeordnet ist, und vertikal in Bezug auf ein absolutes Referenzsystem.

11. Pumpeneinheit (10) nach Anspruch 10, wobei die Auslassdurchführung (62) das Ventil (64) umfasst, das koaxial zu der Auslassdurchführung (62) angeordnet ist.

12. Pumpeneinheit (10) nach Anspruch 10, wobei die Durchführungen eine Verbindungsdurehfuhrung (66) umfassen, die sich intern innerhalb des Zylinderkopfs (18) von der Auslassdurchführung (62) zu der Kavität (52) mit einem größeren Durchmesser erstreckt, und die eine Längsachse (66a) hat, die in Bezug auf die Längsachse (62a) der Auslassdurchfübrung (62) geneigt ist.

13. Pumpeneinheit (10) nach Anspruch 12, wobei die Verbindungsdurehführung (66) innerhalb des Zylinderkopfs (18) eine Längsachse (66a) hat, die in Bezug auf die Längsachse (62a) der Auslassdurchführung (62) mit einem Winkel von 45 ° geneigt ist

14. Pumpeneinheit (10) nach Anspruch 12 oder 13, wobei die Längsachse (66a) innerhalb einer anderen Ebene von derjenigen, welche die Längsachse (62a) der Auslassdurchführung (62) enthält, und senkrecht zu der longitudinalen Achse (20a) der ersten Kavität (20) angeordnet ist.

15. Pumpeneinheit (10) nach Anspruch 14, wobei die Ebene, in der die Längsachse (66a) der Verbindungsdurchführung (66) liegt, in Bezug auf die Längsachse (62a) der Auslassdurchführung (62) innerhalb eines externen Abschnitts des Zylinderkopfs (18) gelegen ist.

16. Pumpeneinheit (10) nach Anspruch 9, wobei die Durchführungen eine Auslassdurchführung (68) der Kavität (52) mit größerem Durchmesser umfassen, der eine Längsachse (68a) hat, transversal angeordnet in Bezug auf die Längsachse (22 a) der zweiten Kavität (22) und der Kavität (52) und vertikal bezogen auf ein absolutes Referenzsystem.

17. Pumpeneinheit (10) nach Anspruch 16, wobei die Längsachse (68a) in einer Ebene liegt, die senkrecht auf den Achsen (20a, 22a) der ersten und zweiten Kavitäten (20, 22) steht, und die eine Längsachse (62 a) der Auslassdurchführung der Kavität (50) von geringerem Durchmesser enthält.

18. Pumpeneinheit (10) nach Ansprüchen 16 oder 17, wobei die Auslassdurchführung (68) das Ventil (70) enthält, das koaxial zu der Auslassdurchführung (68) angeordnet ist.

19. Pumpeneinheit (10) nach Anspruch 16, wobei die Auslassdurchführung (68) sich in eine Verbindungsdurchfubrung (72) innerhalb des Zylinderkopfs (18) erstreckt, welche in einer Verzweigung (74) außerhalb des Zylinderkopfs selbst endet.

20. Pumpeneinheit (10) nach Anspruch 19, wobei die Verbindungsdurchführung (72) eine Längsachse (72a) hat, die bezogen auf die Längsachse (68 a) der Auslassdurchführung (68) geneigt ist und durch eine unterbrochene Linie dargestellt wird.

21. Pumpeneinheit (10) nach Anspruch 20, wobei die Längsachse (72a) der Verbindungsdurchführung (72) in einem Abschnitt innerhalb des Zylinderkopfs (18) bezogen auf die Längsachsen (62a, 68a) der Auslassdurchführungen der entsprechenden Kavitäten (50, 52) angeordnet ist.

22. Pumpeneinheit (10) nach Anspruch 9, wobei die Kavität (50) verbunden ist mit eine Zuführdurchführung (56) innerhalb des Zylinderkopfs (18), die eine Längsachse (56 a) hat, die transversal bezogen auf die Längsachse (20a) der ersten Kavität (20) und der zweiten Kavität (50) und vertikal unter Bezug auf ein absolutes Referenzsystem angeordnet ist.

## Revendications

1. Unité de pompe (10) pour émulsifier de l'air dans un produit, en particulier pour la production de crème glacée, comprenant :
un premier corps (14) et un second corps (16) placés côte à côte l'un par rapport à l'autre et pourvus d'une première et seconde cavités cylindriques respectives (20, 22), chacune ayant un axe longitudinal (20a, 22a) situé parallèle à l'axe de l'autre cavité,
une tête de cylindre (18) montée à une extrémité desdits premier et second corps (14, 16) et pourvue de cavités (50, 52) situées respectivement aux extensions des cavités (20, 22) desdits premier et second corps (14, 16),
**caractérisé par le fait que** la première cavité (20) et la seconde cavité (22) comprennent respectivement une partie de guidage qui contient au moins un guide (28, 30, 36, 38) fait en matériau plastique et qui s'étend jusqu' à un point intermédiaire desdites première et second cavités (20, 22) et **par le fait qu'**une chambre de travail de produit soit envisagée de manière à ce qu'elle puisse s'étendre à partir dudit point intermédiaire jusqu'à un fond respectif (50a, 52a) des cavités (50, 52) creusées dans la tête de cylindre (18), ladite partie de guidage ayant un diamètre inférieur à celui de ladite chambre de travail, dans laquelle ladite partie de guidage comprend un premier guide (28, 36) et un second guide (30, 38) insérés axialement à une distance fixe l'un de l'autre, et dans laquelle le premier corps (14) a un conduit (24) qui traverse transversalement la première cavité (20) à une position intermédiaire aux premier et second guides (28, 30) et dans laquelle le second corps (16) a un conduit (26) qui traverse transversalement la seconde cavité (22) à une position intermédiaire aux premier et second guides (36, 38)

2. Unité de pompe (10) selon la revendication 1, dans laquelle au moins un anneau de maintien (32, 40) est prévu dans chacune desdites première et seconde cavités (20, 22) situées dans une position intermédiaire entre la partie de guidage et la chambre de travail.

3. Unité de pompe (10) selon la revendication 2, dans laquelle au moins deux anneaux de maintien (32, 40) sont prévus dans chacune desdites première et seconde cavités et un canal (34, 42) qui coupe transversalement la première cavité (20) et la seconde cavité (22) respectivement en correspondance avec la zone entre les deux anneaux de maintien (32, 40).

4. Unité de pompe (10) selon la revendication 3, dans laquelle chaque canal (34, 42) se développe le long de l'entière épaisseur du premier corps (14) et du second corps (16) respectivement.

5. Unité de pompe (10) selon l'une quelconque des revendications précédentes, dans laquelle le second corps (16) a une soupape d'air de non retour (43) située en communication avec la seconde cavité (22) par l'intermédiaire d'un conduit (43a).

6. Unité de pompe (10) selon les revendications 2 et 5, dans laquelle ledit conduit (43a) s'ouvre dans la seconde cavité (22) entre le au moins un anneau de maintien (40) et la tête de cylindre (18).

7. Unité de pompe (10) selon l'une quelconque des revendications précédentes, dans laquelle les cavités (50, 52) creusées dans la tête de cylindre (18) sont connectées l'une à l'autre par des conduits (56, 62, 66, 68) creusés à l'intérieur dans la tête de cylindre (18) dont au moins deux longueurs ont des axes longitudinaux (62a, 68a) transversaux par rapport aux axes longitudinaux (20a, 22a) des première et seconde cavités (20, 22) des premier et second corps (14, 16).

8. Unité de pompe (10) selon la revendication 7, dans laquelle les conduits (56, 62, 66, 68) comprennent au moins deux longueurs avec des axes longitudinaux (62a, 68a) perpendiculaires aux axes longitudinaux (20a, 22a) des première et seconde cavités (20, 22) respectivement des premier et second corps (14, 16) et situés selon une direction verticale par rapport à un système de référence absolu.

9. Unité de pompe (10) selon la revendication 8, dans laquelle lesdites longueurs (62a, 68a) contiennent respectivement des soupapes (64, 70) positionnées avec des axes coïncidant avec les axes desdites longueurs.

10. Unité de pompe (10) selon la revendication 9, dans laquelle lesdits conduits dans la tête de cylindre (18) comprennent un conduit de sortie (62) avec un axe longitudinal (62a) positionné transversalement par rapport à l'axe longitudinal (20a) de la première cavité (20) et de la cavité (50) et verticalement par rapport à un système de référence absolu.

11. Unité de pompe (10) selon la revendication 10, dans laquelle ledit conduit de sortie (62) contient ladite soupape (64) positionnée coaxialement avec le conduit de sortie (62).

12. Unité de pompe (10) selon la revendication 10, dans laquelle lesdits conduits comprennent un conduit de connexion (66) qui s'étend, à l'intérieur de la tête de cylindre (18), depuis le conduit de sortie (62) à la cavité (52) avec un diamètre plus grand et qui a un axe longitudinal (66a) incliné par rapport à l'axe longitudinal (62a) du conduit de sortie (62).

13. Unité de pompe (10) selon la revendication 12, dans laquelle ledit conduit de connexion (66) à l'intérieur de la tête de cylindre (18) a un axe longitudinal (66a) incliné par rapport à l'axe longitudinal (62a) du conduit de sortie (62) à un angle égal à 45 °.

14. Unité de pompe (10) selon les revendications 12 ou 13, dans laquelle ledit axe longitudinal (66a) est positionné dans un plan différent de celui qui tient l'axe longitudinal (62a) du conduit de sortie (62) et perpendiculaire à l'axe longitudinal (20a) et la première cavité (20).

15. Unité de pompe (10) selon la revendication 14, dans laquelle ledit plan dans lequel l'axe longitudinal (66a) du conduit de connexion (66) repose est situé dans une partie externe de la tête de cylindre (18) par rapport à l'axe longitudinal (62a) du conduit de sortie (62).

16. Unité de pompe (10) selon la revendication 9, dans laquelle lesdits conduits comprennent un conduit de sortie (68) à partir de la cavité (62) avec un diamètre supérieur, ayant un axe longitudinal (68a) placé transversalement par rapport à l'axe longitudinal (22a) de la seconde cavité et de la cavité (52) et verticalement par rapport à un système de référence absolue.

17. Unité de pompe (10) selon la revendication 16, dans laquelle ledit axe longitudinal (68a) repose sur un plan perpendiculaire aux axes (20a, 22a) des première et seconde cavités (20, 22) et contenant l'axe longitudinal (62a) du conduit de sortie de la cavité (50) de diamètre inférieur.

18. Unité de pompe (10) selon les revendications 16 ou 17, dans laquelle le conduit de sortie (68) contient ladite soupape (70) située coaxialement avec ledit conduit de sortie (68).

19. Unité de pompe (10) selon la revendication 16, dans laquelle le conduit de sortie (68) s'étend dans un conduit de connexion (72) à l'intérieur de la tête de cylindre (18) qui se termine en une jonction (74) hors de la tête de cylindre elle-même.

20. Unité de pompe (10) selon la revendication 19, dans laquelle le conduit de connexion (72) a un axe longitudinal (72a) incliné par rapport à l'axe longitudinal (68a) du conduit de sortie (68) et est constitué par une ligne cassée.

21. Unité de pompe (10) selon la revendication 20, dans laquelle ledit axe longitudinal (72a) du conduit de connexion (72) est situé dans une partie à l'intérieur de la tête de cylindre (18) par rapport aux axes longitudinaux (62a, 58a) des conduits de sortie des cavités respectives (50, 52)

22. Unité de pompe (10) selon la revendication 9, dans laquelle ladite cavité (50) est connectée à un conduit d'alimentation (56) à l'intérieur de la tête de cylindre (18) ayant un axe longitudinal (56a) situé transversalement par rapport à l'axe longitudinal (20a) de la première cavité (20) et de la cavité (50) et verticalement par rapport à un système de référence absolu.
